# EUROPÄISCHE PATENTSCHRIFT

(11) **EP 2 280 792 B1**
(45) Veröffentlichungstag und Bekanntmachung des Hinweises auf die Patenterteilung: **19.10.2011**
(21) Anmeldenummer: 09757110.3
(22) Anmeldetag: 27.05.2009
(51) Int. Cl.: B21D 39/03, B23K 20/04, F16B 5/08, F16B 17/00, B21D 53/08, F24J 2/24

(54) **VERFAHREN ZUM KONTINUIERLICHEN FÜGEN VON ZWEI TEILEN SOWIE DURCH DAS VERFAHREN HERGESTELLTE VERBINDUNG**
METHOD FOR CONTINUOUS JOINING TWO ELEMENTS AND JOINT OBTAINED BY THIS METHOD
PROCÉDÉ D'ASSEMBLAGE CONTINU DE DEUX ELEMENTS ET ASSEMBLAGE OBTENU PAR LEDIT PROCEDE

(30) Priorität: 03.06.2008 DE 102008026462
(43) Veröffentlichungstag der Anmeldung: 09.02.2011
(73) Patentinhaber: Lappe, Wilhelm, 33178 Borchen (DE); Motel, Oliver, 38106 Braunschweig (DE)
(72) Erfinder: Lappe, Wilhelm, 33178 Borchen (DE); Motel, Oliver, 38106 Braunschweig (DE)
(74) Vertreter: Neuhäuser, Uwe
(86) Internationale Anmeldenummer: PCT/DE2009/000735
(87) Internationale Veröffentlichungsnummer: WO 2009/146676

(56) Entgegenhaltungen:
- EP-A- 1 911 534
- EP-B- 1 204 495
- DE-A1- 19 901 015
- DE-A1-102004 040 813
- FR-A- 2 429 640
- JP-A- 58 112 618

## Beschreibung

Die Erfindung betrifft ein Verfahren zum kontinuierlichen Fügen zumindest eines ersten mit zumindest einem zweiten langgestreckten, dünnwandigen Werkstück gemäß dem Oberbegriff des Anspruchs 1 der Erfindung.

Aus der Praxis sind die unterschiedlichsten Fügeverfahren zum Fügen zumindest zweier Werkstücke, vorzugsweise plattenförmiger Werkstücke bekannt.

So sind aus der DE 101 30 726 C2 ein Verfahren und eine Einrichtung zur Herstellung einer Verbindung zwischen sich überlappenden plattenförmigen Bauteilen unter Verwendung eines Stempels, eines Niederhalters und eines Gegenwerkzeuges nach Art des an sich bekannten partiellen Durchsetzfügens, auch als Clinchen bezeichnet, bekannt, wobei ein erstes Bauteil in Richtung zum Stempel angeordnet ist und ein zweites Bauteil an dem Gegenwerkzeug anliegt, und Werkstoff des ersten Bauteils durch einen Stempel mit einer Stempelkraft in Richtung zum Gegenwerkzeug in das zweite Bauteil eingeformt wird. Weiter ist vorgesehen, dass zusätzlich zur Umformung des Werkstoffes eine partielle Kaltpressschweißverbindung zwischen den Bauteilen erzeugt wird. Eine hierzu vergleichbare Lösung ist ferner mit der EP 1 204 495 B1 offenbart.

Weiter sind aus der DE 199 01 015 A1 und der EP 1 911 534 A1 Vorrichtungen und Verfahren zum umformtechnischen Fügen, vorliegend Durchsetzfügen von Teilen bekannt, wobei vorgeschlagen wird, eine Fügenaht als linienförmige Durchsetzfügeverbindung vermittels rotierend beweglicher Werkzeuge herzustellen.

Des Weiteren beschreibt die DE 30 04 311 A1 ein Verfahren zur Herstellung von sogenannten Wärmetauscherplatten, welche aus Rohren für das Wärmetauschermedium bestehen, die mit einer Metallplatte verbunden werden, wobei die Verbindung über eine das Rohr umhüllende Blechlamelle oder Drahtgitter bzw. Spangen erfolgt, welche mit ihren Randbereichen in die Blechplatte eingewalzt bzw. gepresst werden. Dieser Vorgang kann kalt mit einem einzigen Werkzeug erfolgen, das im Durchlaufverfahren eine Vielzahl derartiger Verbindungen gleichzeitig ausführt, wobei neben dem Kaltpressschweißen bei gleichartigen Metallen auch verschiedenartige miteinander nicht verschweißbare Metalle durch Einbetten verbunden werden sollen, und wobei das härtere Metall der Schelle in das weichere Metall der Platte eingepresst wird.

Aus der DE 10 2004 040 813 A1 sind schließlich ein plattenförmiger Strahlungsabsorber und ein Verfahren zu seiner Herstellung bekannt, wobei im Wesentlichen einzelne plattenförmige Verbindungsabschnitte des Strahlungsabsorbers über ausgeformte Randstege mit einer Mehrzahl Absorberrohren stoffschlüssig durch Schweißen oder Löten verbunden werden.

Ausgehend vom eingangs beschriebenen Stand der Technik ist es Aufgabe der Erfindung, ein hinsichtlich Leistung, Dauerhaftigkeit und Wirtschaftlichkeit verbessertes Verfahren zum kontinuierlichen Fügen zumindest eines ersten mit zumindest einem zweiten langgestreckten, dünnwandigen Werkstück aus metallischem Material ohne Wärmeeintrag anzugeben.

Die Lösung dieser Aufgabe ergibt sich aus den Merkmalen des Patentanspruchs 1, während vorteilhafte Ausgestaltungen und Weiterbildungen der Erfindung den Unteransprüchen entnehmbar sind.

Der Erfindung liegt die Erkenntnis zugrunde, dass sich das an sich bekannte Fügeverfahren des Kaltpressschweißens sich äußerst vorteilhaft zum Fügen langgestreckter, dünnwandiger Werkstücke aus metallischen Werkstoffen anbietet, wenn die Voraussetzungen geschaffen sind, besagtes Fügeverfahren mit geringstmöglichem Aufwand und kontinuierlich durchführen zu können.

Demnach wird die gestellte Aufgabe durch ein Verfahren zum kontinuierlichen Fügen zumindest eines ersten mit zumindest einem zweiten langgestreckten, dünnwandigen Werkstück aus metallischen Werkstoffen gelöst, bei dem die Werkstücke aufeinandergelegt in einen Walzspalt zwischen zwei achsparallel gegenüberliegend angeordneten, gegenläufig rotierbaren Walzenrädern, während wenigstens eines der Walzenräder senkrecht zur Walzrichtung und zu den Werkstücken druckbeaufschlagbar ist, eingeführt und entlang einer Linie unter einem definierten Druck "P" in Fügeintervallen durch Kaltpressschweißen gefügt werden.

Infolge dieses Verfahrens, welches sich auch als Roll-Fügeprozess beschreiben lässt, ist unter Vermeidung von erhöhtem Wärmeeintrag, der insbesondere bei Schweiß- und Lötverfahren festzustellen ist und mit nachteiligem Verzug der zu fügenden Werkstücke einhergeht, mit geringem maschinentechnischem Aufwand schnell und kostengünstig eine Fügenaht realisierbar, die hohen Ansprüchen im Hinblick auf Festigkeit und Dauerhaftigkeit sowie Anmutung derselben gerecht wird.

Gemäß einer ersten bevorzugten Ausgestaltung des Herstellungsverfahrens wird eine Fügenaht mit abwechselnd gefügten und ungefügten Bereichen ausgebildet, woraus eine hohe Grundsteifigkeit des erzeugten Werkstückverbundes resultiert.

Im Hinblick auf diese erste bevorzugte Ausgestaltung des Verfahrens kann vorteilhaft ein Walzenrad als Stempelrad mit vorzugsweise gleichmäßig über den Umfang desselben verteilten Erhebungen nach Art eines Stachelrades und ein achsparallel gegenüberliegend angeordnetes Walzenrad als Matrizenrad mit einer zu den Erhebungen des Stempelrades korrespondierenden Umfangsnut oder mit zu den Erhebungen des Stempelrades korrespondierenden Vertiefungen verwendet werden.

Demgegenüber kann gemäß einer zweiten bevorzugten Ausgestaltung des Herstellungsverfahrens eine Fügenaht mit abwechselnd gegengerichteten gefügten Bereichen ausgebildet werden, wodurch eine weiter erhöhte Grundsteifigkeit des erzeugten Werkstückverbundes erzielbar ist.

Im Hinblick darauf können zwei Walzenräder verwendet werden, die sowohl als Stempelrad als auch als Matrizenrad fungieren, indem jedes Walzenrad über vorzugsweise gleichmäßig über den Umfang desselben verteilte Erhebungen nach Art eines Stachelrades und dazwischen angeordnete und zu den Erhebungen des anderen Walzenrades korrespondierende Umfangsnut-Abschnitte oder Vertiefungen verfügt.

Vorteilhaft können in besagten Fügeintervallen gefügte Bereiche mit einer napfförmig gestalteten Kontur, deren Breitenausdehnung gleich, kleiner oder größer der Längsausdehnung derselben ist, ausgebildet werden. Durch die Wahl der Abmaße besagter napfförmiger Konturen ist es gestattet, die gewünschte Längs- und/oder Quersteifigkeit des Werkstückverbundes definiert einzustellen.

Weiter vorteilhaft können napfförmige Konturen mit während des Fügeprozesses in ihren Randbereichen sich einstellenden wulstförmigen Überhöhungen ausgebildet werden, die sich Ihrerseits über die benachbarte Oberflächenkontur des gebildeten Werkstückverbundes aufbauen. In umfangreichen Versuchen konnte durch eine derartige Ausbildung die Grundsteifigkeit des erzeugten Werstückverbundes noch weiter verbessert werden.

Als besonders zweckmäßig hat sich vorbeschriebenes Verfahren zum Fügen eines ersten, plattenförmigen Werkstücks mit einem zweiten, rohrförmigen Werkstück erwiesen,
- wobei ein rohrförmiges Werkstück verwendet wird, welches zumindest im Bereich der auszubildenden Fügenaht derart zusammengepresst ist, dass zwei plan aufeinanderliegende Rohrwandungsabschnitte ausgebildet werden,
- und wobei das erste, plattenförmige mit dem zweiten, rohrförmigen Werkstück derart unter einem definierten Druck "P" durch Kaltpressschweißen gefügt wird, dass lediglich zwischen dem ersten, plattenförmigen Werkstück und dem unmittelbar benachbarten Rohrwandungsabschnitt des zweiten, rohrförmigen Werkstücks eine Fügeverbindung durch besagtes Kaltpressschweißen bewirkt wird.

Im Anschluss an den Fügeprozess durch Kaltpressschweißen kann das zweite, rohrförmige Werkstück zweckmäßigerweise derart definiert umgeformt werden, dass die aufeinanderliegenden Rohrwandungsabschnitte, einen langgestreckten Hohlraum ausbildend, voneinander beabstandet werden.

In weiterer vorteilhafter Ausgestaltung der Erfindung kann das zweite, rohrförmige Werkstück derart definiert umgeformt werden, dass bei Beibehaltung des langgestreckten Hohlraumes ein möglichst großflächiger Kontakt mit dem ersten, plattenförmigen Werkstück bewirkt wird.

Vorteilhaft kann hierbei das zweite, rohrförmige Werkstück zu einem Werkstück mit einem weitestgehend ovalen oder polygonalen Querschnitt umgeformt werden.

Schließlich bietet es sich an, das zweite, rohrförmige Werkstück nach einem an sich bekannten IHU-Verfahren (IHU = Innen-Hochdruck-Umformung) umzuformen.

Die Erfindung betrifft überdies einen Platten- oder Streifenwärmetauscher hergestellt nach dem erfindungsgemäßen Verfahren, wobei der Platten- oder Streifenwärmetauscher zumindest ein plattenförmiges Werkstück und eine Mehrzahl weitestgehend gleichgerichtet nebeneinander angeordnete rohrförmige Werkstücke und/oder eine oder mehrere mäanderförmig ausgebildete rohrförmigen Werkstücke aufweist.

Dabei können das zumindest eine plattenförmige Werkstück und das/die rohrförmige/n Werkstück/e aus unterschiedlichem oder gleichem metallenen Werkstoff bestehen.

Besagter Platten- oder Streifenwärmetauscher bietet sich besonders zur Verwendung als Strahlungsabsorber, insbesondere Sonnenkollektor, zur Raumheizung und/oder -kühlung und zur Materialerwärmung und/oder -kühlung an.

Die Erfindung wird nachstehend anhand der in den Zeichnungen schematisch dargestellten Ausführungsbeispiele näher erläutert. Es zeigen:
- Fig. 1: eine Vorrichtung zum kontinuierlichen Fügen zweier langgestreckter, dünnwandiger Werkstücke, mit zwei Walzenrädern in der Draufsicht in Walzrichtung gesehen (teilweise geschnitten dargestellt - Schnitt II-II nach Fig. 2),
- Fig. 2: den Schnitt I-I nach Fig. 1,
- Fig. 3: ein mittels der Vorrichtung nach Fig. 1 erzeugtes Probestück aus zwei untereinander verbundenen Werkstücken in einer perspektivischen Ansicht von schräg oben,
- Fig. 4: ein Walzenrad der Vorrichtung nach Fig. 1 in Form eines Matrizenrades in einer Einzeldarstellung,
- Fig. 5: die Einzelheit "X" nach Fig. 4 gemäß einer ersten Ausführungsform,
- Fig. 6: die Einzelheit "X" nach Fig. 4 gemäß einer weiteren Ausführungsform,
- Fig. 7: eine Schnittansicht eines mittels der Vorrichtung nach Fig. 1 erzeugten Werkstückverbundes zum Zeitpunkt unmittelbar nach dem Fügen der beteiligten Werkstücke,
- Fig. 8: der Werkstückverbund nach Fig. 7 im Anschluss an einen nachfolgenden Umformvorgang, und
- Fig. 9: den Schnitt III-III nach Fig. 8.

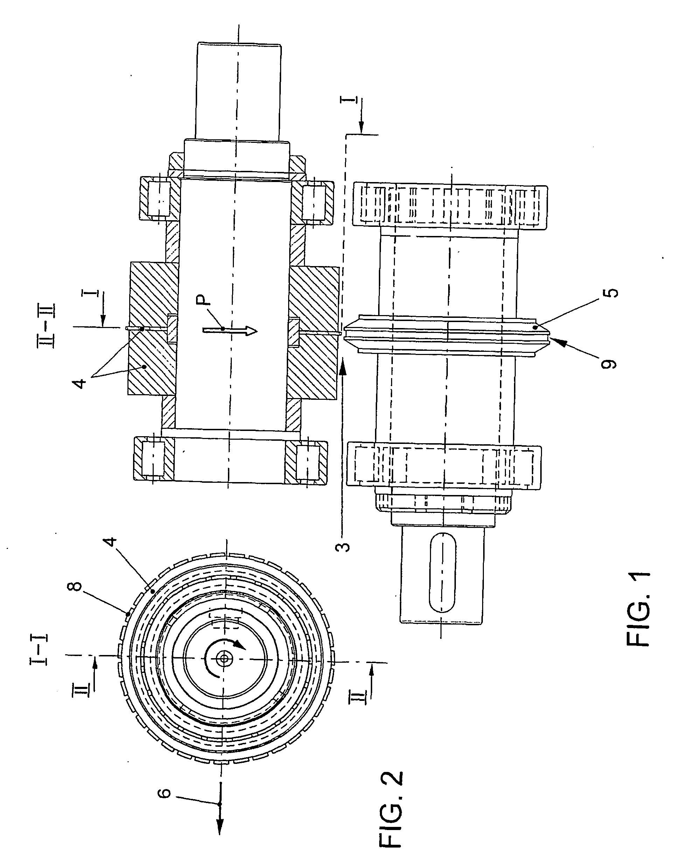

Fig. 1 zeigt danach äußerst schematisch besagte Vorrichtung zum kontinuierlichen Fügen eines ersten mit zumindest einem zweiten langgestreckten, dünnwandigen Werkstück 1, 2 aus metallischen Werkstoffen, wobei erstes und zweites Werkstück 1, 2 ausschließlich plattenförmig ausgebildet (nicht näher dargestellt) oder durch ein plattenförmiges und ein rohrförmiges Werkstück 1, 2 gebildet sein können (vgl. Fig. 2, 3, 7 bis 9).

Danach sind vorliegend in einem nicht näher dargestellten, jedoch an sich bekannten Stützrahmen zwei achsparallel gegenüberliegend angeordnete und einen Walzspalt 3 ausbildende sowie gegenläufig rotierbare Walzenräder 4, 5 angeordnet.

Zumindest eines der Walzenräder 4, 5 kann dabei aktiv drehangetrieben sein, wodurch eine kontinuierliche Vorschubbewegung der zu verbindenden Werkstücke 1, 2 durch den gebildeten Walzspalt 3 hindurch bewirkbar ist.

Zusätzlich oder auch in Alleinstellung können der Vorrichtung an sich bekannte und demgemäß nicht näher dargestellte Mittel zugeordnet sein, die die aufeinanderliegenden und durch Kaltpressschweißen zu fügenden Werkstücke 1, 2 endseitig greifen und durch den Walzspalt 3 hindurchziehen und/oder -drücken.

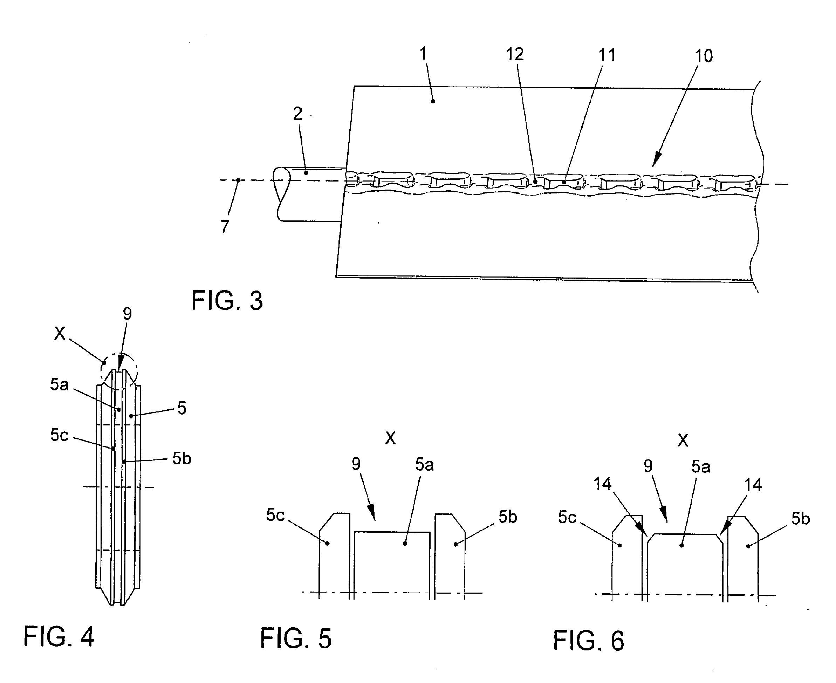

Wenigstens eines der beiden Walzenräder 4, 5, vorliegend das gemäß der Zeichnungsfigur oben liegende Walzenrad 4 ist senkrecht zur Walzrichtung 6 und zu den hier nicht näher gezeigten Werkstücken 1, 2 mit einem Druck "P" beaufschlagbar, der es gestattet, besagte Werkstücke 1, 2 entlang einer Linie 7 in Fügeintervallen durch Kaltpressschweißen zu fügen (Fig. 2, 3).

Durch Kaltpressschweißen werden die beiden Fügepartner bzw. Werkstücke 1, 2 so aufeinander gepresst, dass es zu einer großen Dehnung bzw. zu einem Fließen der beim Schweißvorgang involvierten metallenen Materialien respektive Werkstoffe kommt. Das durch besagte Dehnung hervorgerufene Aufbrechen der auf den Oberflächen der metallenen Werkstücke 1, 2 befindlichen Oxydschichten sorgt in Verbindung mit dem Pressvorgang für die notwendige Annäherung der Fügepartner bis in den Bereich der Metallgitterstrukturen und somit zu der gewünschten Verbindung. Hierbei kann eine vorab durchgeführte Oberflächenbehandlung durch Schleifen o. ä. sowie eine zusätzliche Erwärmung der Materialien sich vorteilhaft auf den Fügevorgang auswirken.

Wie insbesondere der Fig. 2 weiter zu entnehmen ist, ist das besagte oben liegende Walzenrad 4 als Stempelrad mit vorzugsweise gleichmäßig über den Umfang desselben verteilten Erhebungen 8 nach Art eines sogenannten Stachelrades ausgebildet.

Das zweite achsparallel darunter angeordnete Walzenrad 5 ist als Matrizenrad ausgebildet und verfügt seinerseits über eine zu den Erhebungen 8 des oben liegenden Walzenrades 4 korrespondierende Umfangsnut 9 (Fig. 1, 4 bis 6).

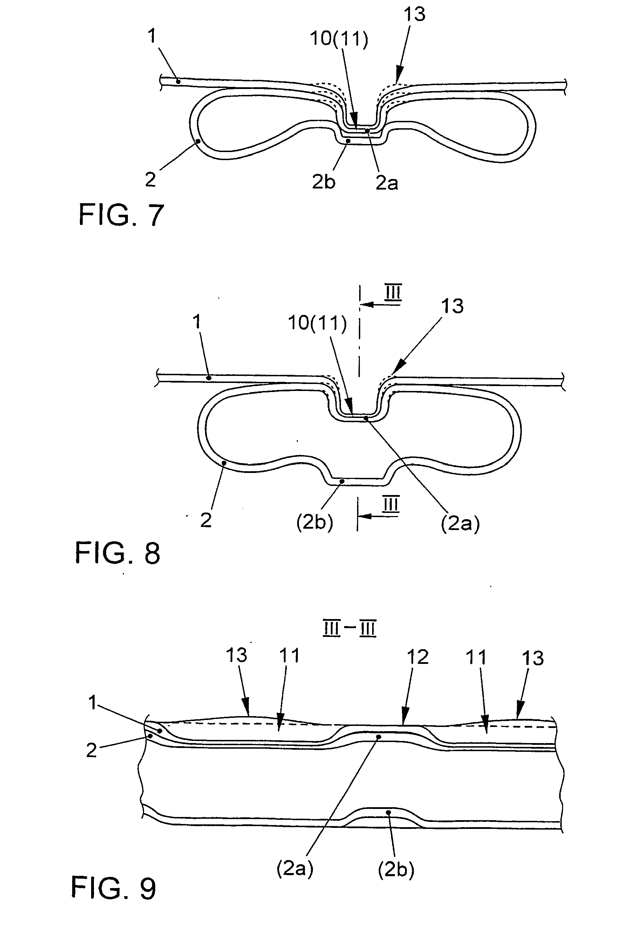

Vermittels einer derartigen Walzenräder-Paarung ist unter einem definierten Druck "P" in Fügeintervallen durch Kaltpressschweißen eine Fügenaht 10 mit abwechselnd gefügten Bereichen 11 und ungefügten Bereichen 12 ausbildbar (vgl. insbes. Fig. 3 und 9).

Besagter erforderlicher Druck "P" zum Kaltpressschweißen ist in Anhängigkeit von den zu fügenden Werkstoffen und Wandungsdicken der Werkstücke 1, 2 empirisch ermittelbar und kann in Tabellenform und/oder in einer geeigneten Software zur Ansteuerung des druckbeaufschlagbaren Walzenrades 4 abgelegt werden.

Für den Fachmann leicht nachvollziehbar kann es demgegenüber auch angezeigt sein, das Matrizenrad derart auszubilden, dass dasselbe über zu den Erhebungen 8 des Stempelrades korrespondierende Vertiefungen verfügt, wodurch sich der Umformprozess vorteilhaft beeinflussen lässt (nicht näher dargestellt).

Zum Vorteil kann es auch gereichen, wenn beide Walzenräder 4, 5 so ausgebildet sind, dass dieselben sowohl als Stempelrad als auch als Matrizenrad fungieren.

Insoweit verfügen dieselben dann über vorzugsweise gleichmäßig über den Umfang derselben verteilte Erhebungen 8 nach Art eines Stachelrades und dazwischen angeordnete und zu den Erhebungen 8 des jeweils anderen Walzenrades 5, 4 korrespondierende, hier nicht näher dargestellte Umfangsnut-Abschnitte oder Vertiefungen, wodurch während des eigentlichen kontinuierlichen Fügeprozesses unter besagtem definierten Druck "P" in Fügeintervallen durch Kaltpressschweißen eine Fügenaht 10 mit abwechselnd gegengerichteten gefügten Bereichen 11, ggf. noch unterbrochen durch ungefügte Bereiche 12, ausbildbar ist (nicht näher dargestellt).

Die Erhebungen 8 und die dazu korrespondierende Umfangsnut 9 bzw. die dazu korrespondierenden Umfangsnut-Abschnitte oder Vertiefungen sind bevorzugt derart ausgebildet, dass in besagten Fügeintervalleri gefügte Bereiche 11 mit einer napfförmigen Kontur entstehen (Fig. 3, 7 bis 9).

Wie bereits oben festgestellt, können derartige napfförmige Konturen eine Breitenausdehnung aufweisen, die gleich, kleiner oder größer der Längsausdehnung derselben ist. Durch die Wahl der Abmaße besagter napfförmiger Konturen ist es gestattet, die gewünschte Längs- und/oder Quersteifigkeit des auszubildenden Werkstückverbundes in weiten Grenzen definiert einzustellen.

Um im Zuge des eigentlichen Fügeprozesses durch Kaltpressschweißen, welches mit einem Rückfließen des Werkstoffes entgegen der Fügerichtung einhergeht, das Fließen des Werkstoffes vorteilhaft beeinflussen zu können, sind im Umfangsbereich zumindest eines der Walzenräder 4, 5, vorliegend des Walzenrades 5 respektive Matrizenrades, zusätzliche Konturen vorgesehen, die während des Fügeprozesses die Ausbildung wulstförmiger Überhöhungen 13 (Fig. 7 bis 9) im Randbereich der gebildeten napfförmigen Konturen gestatten.

Die wulstförmigen Überhöhungen 13 bauen sich hierbei vorteilhaft über die benachbarte Oberflächenkontur des gebildeten Werkstückverbundes auf und bewirken eine weiter erhöhte Grundsteifigkeit bzw. Festigkeit desselben (gestrichelte Linienführung).

Gemäß den Fig. 1 und 4 bis 6 setzt sich das Walzenrad 5 respektive Matrizenrad aus einem sogenannten Ambossring 5a, auf dem das Walzenrad 4 bzw. Stempelrad abwälzt, sowie aus seitlich desselben angeordneten Stützscheiben 5b, 5c, die gegebenenfalls mittels nicht näher dargestellter Distanzringe zum Ambossring 5a axial beabstandet gehalten werden, zusammen.

Der Ambossring 5a ist im Durchmesser geringfügig kleiner als die Stützscheiben 5b, 5c ausgebildet, so dass es während des Fügens zu einem Tiefziehen der zu fügenden Werkstücke 1, 2 mit besagter Napfbildung kommt.

Der Bereich in dem die Verbindungen entstehen, ist somit aus der Blechebene sowohl des die Decklage bildenden ersten Werkstücks 1 als auch des zweiten Werkstücks 2 herausgehoben und wird hier verstemmt, bis bei Erreichen des erforderlichen Druckes "P" das Kaltverschweißen einsetzt.

Beim Verstemmen wird der Werkstoff zwischen den Werkzeugpartnern (Walzenräder 4, 5) verdrängt und weicht vorzugsweise seitlich aus. Infolge dieser Werkstoffbewegung kommt es zu einem sogenannten Rückfliesen des Werkstoffes entgegen der Werkzeugbewegung, welche durch eine besondere Ausbildung der Werkzeuge, insbesondere durch die Ausformung der Matrize definiert beeinflusst werden kann.

So neigt die Variante gemäß Fig. 6 mit seitlichen Freistichen 14 am Ambossring 5a zu einem stärkeren Rückfließen des Werkstoffs und damit zu einem verstärkten Aufbau der besagten wulstförmigen Überhöhungen 13 als die Variante gemäß Fig. 5, welche auf derartige Freistiche 14 verzichtet.

Nachfolgend wird die Erfindung insbesondere anhand der Fig. 7 bis 9 verfahrensseitig näher betrachtet.

Im Wesentlichen ist hier beabsichtigt, zumindest ein erstes, plattenförmiges Werkstück 1 mit zumindest einem zweiten, rohrförmigen Werkstück 2 kontinuierlich in Fügeintervallen durch Kaltpressschweißen zu fügen, wobei die zu fügenden Werkstücke 1, 2 aus einem metallenen Werkstoff, beispielsweise aus Aluminium oder Kupfer bestehen.

Der hierdurch erzielbare Werkstückverbund kann beispielsweise zur Ausbildung eines Platten- oder Streifenwärmetauschers als Bestandteil eines thermischen Sonnenkollektors verwendet werden, der seinerseits der Umwandlung energiereicher Bestandteile des Sonnenlichtes in Wärme dient, die mittels eines vorzugsweise flüssigen Wärmeträgermediums zur Weiternutzung dem besagten Wärmetauscher entnommen wird. Ebenso kann es auch angezeigt sein, Wärme oder auch Kälte mittels eines geeigneten flüssigen oder gasförmigen Trägermediums in den Wärmetauscher einzuleiten, um angrenzende Räume und/oder Materialien bzw. Bauteile zu erwärmen oder zu kühlen.

Ein derartiger Wärmetauscher besteht im Wesentlichen zum einen aus zumindest einem das Trägermedium führenden Rohr, welches geradlinig oder gekrümmt, beispielsweise mäanderförmig gekrümmt, ausgebildet sein kann, und/oder aus einem durch eine Mehrzahl von Rohren gebildeten Rohrsystem und zum anderen aus zumindest einer, mit besagtem/n Rohr/en fest verbundenen dünnwandigen Metallplatte oder Metallfolie.

Der Fügeprozess ist, wie bereits oben dargetan, durch einen linearen Roll-Fügeprozess, kombiniert mit einer Kaltpressschweißung der Fügepartner gekennzeichnet.

Es versteht sich für den Fachmann von selbst, dass gesetzt den Fall, das ein plattenförmiges Werkstück 1 mit einer Mehrzahl von rohrförmigen Werkstücken 2 bestückt werden soll, die Vorrichtung zum kontinuierlichen Fügen eine Mehrzahl in Bewegungsrichtung der zu fügenden Werkstücke 1, 2 gesehen nebeneinander angeordnete Walzenräder-Paarungen der oben beschriebenen Art zur gleichzeitigen, kontinuierlichen Erstellung einer Mehrzahl von Fügenähten 10 durch Kaltpressschweißen aufweisen kann (nicht näher dargestellt).

Der Fügeprozess setzt jedoch eine Gestaltung insbesondere des rohrförmigen Werkstücks 2 in der Weise voraus, dass dasselbe zumindest im Bereich der auszubildenden Fügenaht 10 derart umgeformt respektive zusammengepresst ist, dass zwei plan aufeinanderliegende Rohrwandungsabschnitte 2a, 2b ausgebildet werden.

Zweckmäßigerweise werden das Zusammenpressen des rohrförmigen Werkstücks 2 und der in Rede stehende Fügeprozess derart kombiniert, dass unmittelbar vor dem Fügen das rohrförmige Werkstück 2 vermittels an sich bekannter geeigneter Mittel zum Zusammenpressen, vorzugsweise mittels Walzenpressen, zusammengepresst und danach samt dem plattenförmigen Werkstück 1 in den Walzspalt 3 eingeführt wird.

Für vorliegenden Anwendungsfall sind demgemäß drei in den Fügeprozess involvierte Blechebenen zu berücksichtigen, nämlich zum einen die Blechebene des ersten, plattenförmigen Werkstücks 1 und zum anderen zwei Blechebenen des zweiten, rohrförmigen Werkstücks 2.

Beabsichtigt ist jedoch, dass lediglich die beiden benachbarten Blechebenen der beiden zu fügenden Werkstücke 1, 2 die zur Kaltpressschweißung notwendige Umformung erfahren, wogegen die dritte Blechebene, die durch die zur Fügezone abgewandte Blechebene des rohrförmigen Werkstücks 2 gebildet ist, zwar ebenfalls eine Umformung durch Ausbildung von napfförmigen Konturen erfährt, jedoch lediglich der Abstützung während des Fügeprozesses dient und keinerlei feste Verbindung mit den übrigen Blechebenen eingeht (vgl. Fig. 7).

Gesteuert wird ein derartig selektiver Kaltpressschweißvorgang im Wesentlichen durch den aufzubringenden Druck "P", welcher, wie bereits oben ausgeführt, in Abhängigkeit von den zu fügenden Werkstoffen und Wandungsdicken der Werkstücke 1, 2 empirisch ermittelbar ist, sowie durch eine Vorbehandlung der Oberflächen der beiden zu fügenden Blechebenen, indem dieselben einer Reinigung durch Schleifen oder dgl. derart unterzogen werden, dass die vorhanden Oxydschicht bereits vorab aufgebrochen oder sogar beseitigt wird. Eine selektive Erwärmung nur der Blechebenen, die unmittelbar gefügt werden sollen, kann sich ebenfalls vorteilhaft auf den Fügeprozess auswirken.

In Abhängigkeit von der oben beschriebenen besonderen Ausbildung der Vorrichtung zum kontinuierlichen Fügen, sind verschiedenartige Fügenähte 10 ausbildbar. Vorliegend ist ein kontinuierlicher Wechsel aus gefügten und ungefügten Bereichen 11, 12 zu verzeichnen (vgl. Fig. 3 und 9), jedoch beschränkt sich die Erfindung nicht auf derartige Fügenähte 10, sondern erfasst auch hier nicht näher gezeigte Fügenähte 10 mit abwechselnd gegengerichteten, d. h., abwechseln nach unten und oben gerichteten gefügten Bereichen 11 napfförmiger Kontur, ggf. noch unterbrochen durch ungefügte Bereiche 12.

Um bei bestimmungsgemäßem Gebrauch des gebildeten Werkstückverbundes als Platten- oder Streifenwärmetauscher einen ausreichenden Durchfluss des Wärmeoder Kälteträgermediums zu gewährleisten, ist es im Anschluss an den eigentlichen Fügeprozess erforderlich, das zweite, rohrförmige Werkstück 2 derart definiert umzuformen, dass die aufeinanderliegenden Rohrwandungsabschnitte 2a, 2b, einen langgestreckten Hohlraum ausbildend, voneinander beabstandet werden.

Hierzu bietet sich das an sich bekannte Verfahren des Innen-Hochdruck-Umformens (IHU) an, mit dem eine kontrollierte Aufweitung des für den eigentlichen Fügeprozess flach gepressten Rohres hinsichtlich eines optimalen Rohrquerschnittes zur Bereitstellung möglichst großer Wärmeübertragungszonen bzw. eines möglichst großflächigen Kontaktes zwischen dem plattenförmigen und dem rohrförmigen Werkstück 1, 2 gestattet ist.

Im Wesentlichen wird beim Innen-Hochdruck-Umformen im Inneren des rohrförmigen Werkstücks 2 mittels eines druckbeaufschlagbaren Mediums, wie einem Fluid oder einem Gas, ein derartig hoher Druck aufgebaut, dass sich das ursprünglich zusammengepresste rohrförmige Werkstück 2 aufweitet. Vermittels Einspannung des rohrförmigen Werkstücks 2 kann der Grad der Aufweitung begrenzt werden, wodurch ein definierter Querschnitt realisierbar ist, der vorstehenden Anforderungen bzgl. möglichst großer Wärmeübertragungszonen gerecht wird (vgl. Fig. 8).

Nebenbei bemerkt, kann das IHU-Verfahren auch gleichzeitig zur Dichtigkeitsprüfung dienen.

In umfangreichen Versuchen haben sich rohrförmige Werkstücke 2 mit einem weitestgehend ovalen oder polygonalen Querschnitt besonders bewährt.

Die beim eigentlichen Fügeprozess in Linie 7 bzw. in der Fügenaht 10 kontinuierlich ausgebildeten napfförmigen Konturen sowohl der gefügten Bereiche 11 als auch im Bereich des ungefügten Rohrwandungsabschnittes 2b des rohrförmigen Werkstücks 2 bewirken in Verbindung mit einem von einem runden Querschnitt abweichenden Querschnitt des rohrförmigen Werkstücks 2 eine turbulente Strömung des im rohrförmigen Werkstück 2 fließenden Wärme- oder Kälteträgermediums, wodurch gegenüber herkömmlich in runden Rohren vorherrschender weitestgehend laminarer Strömung eine verbesserte Energieaufnahme gestattet und in der Folge ein höherer Wirkungsgrad des gesamten Platten- oder Streifenwärmetauschers erzielbar ist.

Weiterhin sorgen die napfförmigen Konturen für eine hohe Stabilität des mit dem/n rohrförmigen Werkstück/en 2 verbundenen plattenförmigen Werkstückes 1 in Querrichtung zur Fügenaht 10, sowie bei der Nutzung als Platten- oder Streifenwärmetauscher auftretenden Temperaturdifferenzen für entsprechende Ausdehnungsbereiche des beispielsweise bimetallischen Wärmetauschersystems, wenn beispielsweise das plattenförmige Werkstück 1 aus Aluminium und das/die rohrförmige/n Werkstück/e aus Kupfer besteht/en.

Zwar empfehlen sich hier insbesondere Aluminium und Kupfer, jedoch ist die Erfindung nicht auf diese metallenen Werkstoffe beschränkt, sondern erfasst jedwede metallenen Werkstoffe oder auch Werkstoffkombination, die sich gemäß dem beschriebenen Verfahren zum Kaltpressschweißen eignen.

Als weiterer Vorteil ist herauszustellen, dass durch den Wegfall intermetallischer Phasen, die herkömmlich bei eingesetzten Laserschweißverfahren mit demgemäß hohem Wärmeeintrag entstehen und als spröder Bereich der Schweißnaht aufgrund thermisch erzeugter Spannungen bruchgefährdet sind, abgesehen von der eigentlichen Fügenaht 10 die Erstellung einer weitestgehend planebenen Fläche des Platten- oder Streifenwärmetauscher ermöglicht ist.

Durch das Vermeiden der herkömmlich beim Schmelzschweißen eingeleiteten partiell großen Mengen an Wärmeenergie und dem hieraus resultierenden Verwurf der Oberfläche sind in der beschriebenen Form hergestellte Platten- oder Streifenwärmetauscher für die Energieübertragung an planebenen Bauteilen (Wandheizung, Photovoltaikzelle etc.) vorteilhafter einsetzbar als die marktübliche Technik, da hier eine weitestgehend ganzflächige Wärmeübertragung ermöglicht wird.

Ferner ist auch der Einsatz dieses Platten- oder Streifenwärmetauschers in besagten Sonnenkollektoren mit leistungssteigernden Antireflex-Klargläsern in optisch anspruchsvollen Gebäudebereichen (Fassade) gestattet. Durch das Vermeiden beuliger Oberflächen können derartige Wärmetauscher auch als gestalterische Elemente fungieren.

### Bezugszeichenliste

- 1 -: erstes Werkstück
- 2 -: zweites Werkstück
- 2a -: Rohrwandungsabschnitt
- 2b -: Rohrwandungsabschnitt
- 3 -: Walzspalt
- 4 -: Walzenrad (Stempelrad)
- 5 -: Walzenrad (Matrizenrad)
- 5a -: Ambossring
- 5b -: Stützscheibe
- 5c -: Stützscheibe
- 6 -: Walzrichtung
- 7 -: Linie (Fügenaht 10)
- 8 -: Erhebungen (Stempelrad / Walzenrad 4)
- 9 -: Umfangsnut (Matrizenrad / Walzenrad 5)
- 10 -: Fügenaht
- 11 -: gefügte Bereiche
- 12 -: ungefügte Bereiche
- 13 -: Überhöhungen
- 14 -: Freistiche

## Patentansprüche

1. Verfahren zum kontinuierlichen Fügen zumindest eines ersten mit zumindest einem zweiten langgestreckten, dünnwandigen Werkstück (1, 2) aus metallischen Werkstoffen, wobei die Werkstücke (1, 2) aufeinandergelegt in einen Walzspalt (3) zwischen zwei achsparallel gegenüberliegend angeordneten, gegenläufig rotierbaren Walzenrädern (4, 5), während wenigstens eines der Walzenräder (4, 5) senkrecht zur Walzrichtung und zu den Werkstücken (1, 2) druckbeaufschlagbar ist, eingeführt und entlang einer Linie (7) unter einem definierten Druck "P" in Fügeintervallen gefügt werden, **dadurch gekennzeichnet, dass** die Werkstücke (1, 2) in Fügeintervallen durch Kaltpressschweißen gefügt werden.

2. Verfahren nach Anspruch 1, **dadurch gekennzeichnet, dass** eine Fügenaht (10) mit abwechselnd gefügten und ungefügten Bereichen (11, 12) ausgebildet wird.

3. Verfahren nach Anspruch 2, **dadurch gekennzeichnet, dass** ein Walzenrad (4) als Stempelrad mit vorzugsweise gleichmäßig über den Umfang desselben verteilten Erhebungen (8) nach Art eines Stachelrades und ein achsparallel gegenüberliegend angeordnetes Walzenrad (5) als Matrizenrad mit einer zu den Erhebungen (8) des Stempelrades korrespondierenden Umfangsnut (9) oder mit zu den Erhebungen (8) des Stempelrades korrespondierenden Vertiefungen verwendet wird.

4. Verfahren nach Anspruch 1, **dadurch gekennzeichnet, dass** eine Fügenaht (10) mit abwechselnd gegengerichteten gefügten Bereichen (11) ausgebildet wird.

5. Verfahren nach Anspruch 4, **dadurch gekennzeichnet, dass** zwei Walzenräder (4, 5) verwendet werden, die sowohl als Stempelrad als auch als Matrizenrad fungieren, indem jedes Walzenrad (4, 5) über vorzugsweise gleichmäßig über den Umfang desselben verteilte Erhebungen (8) nach Art eines Stachelrades und dazwischen angeordnete und zu den Erhebungen (8) des anderen Walzenrades (5, 4) korrespondierende Umfangsnut-Abschnitte oder Vertiefungen verfügt.

6. Verfahren nach einem der Ansprüche 1 bis 5, **dadurch gekennzeichnet, dass** in besagten Fügeintervallen gefügte Bereiche (11) mit einer napfförmigen Kontur, deren Breitenausdehnung gleich, kleiner oder größer der Längsausdehnung derselben ist, ausgebildet werden.

7. Verfahren nach Anspruch 6, **dadurch gekennzeichnet, dass** napfförmige Konturen mit während des Fügeprozesses in ihren Randbereichen sich einstellenden wulstförmigen Überhöhungen (13), die sich Ihrerseits über die benachbarte Oberflächen kontur des gebildeten Werkstückverbundes aufbauen, ausgebildet werden.

8. Verfahren nach einem der Ansprüche 1 bis 7 zum Fügen eines ersten, plattenförmigen Werkstücks (1) mit einem zweiten, rohrförmigen Werkstück (2),
- wobei ein rohrförmiges Werkstück (2) verwendet wird, welches zumindest im Bereich der auszubildenden Fügenaht (10) derart zusammengepresst ist, dass zwei plan aufeinanderliegende Rohrwandungsabschnitte (2a, 2b) ausgebildet werden,
- und wobei das erste, plattenförmige mit dem zweiten, rohrförmigen Werkstück (1, 2) derart unter einem definierten Druck "P" durch Kaltpressschweißen gefügt wird, dass lediglich zwischen dem ersten, plattenförmigen Werkstück (1) und dem unmittelbar benachbarten Rohrwandungsabschnitt (2a) des zweiten, rohrförmigen Werkstücks (2) eine Fügeverbindung durch besagtes Kaltpressschweißen bewirkt wird.

9. Verfahren nach Anspruch 8, **dadurch gekennzeichnet, dass** im Anschluss an den Fügeprozess durch Kaltpressschweißen das zweite, rohrförmige Werkstück (2) derart definiert umgeformt wird, dass die aufeinanderliegenden Rohrwandungsabschnitte (2a, 2b), einen langgestreckten Hohlraum ausbildend, voneinander beabstandet werden.

10. Verfahren nach Anspruch 9, **dadurch gekennzeichnet, dass** das zweite, rohrförmige Werkstück (2) derart definiert umgeformt wird, dass bei Beibehaltung des langgestreckten Hohlraumes ein möglichst großflächiger Kontakt mit dem ersten, plattenförmigen Werkstück (1) bewirkt wird.

11. Verfahren nach Anspruch 10, **dadurch gekennzeichnet, dass** das zweite, rohrförmige Werkstück (2) zu einem Werkstück mit einem weitestgehend ovalen oder polygonalen Querschnitt umgeformt wird.

12. Verfahren nach einem der Ansprüche 8 bis 11, **dadurch gekennzeichnet, dass** das zweite, rohrförmige Werkstück (2) nach einem IHU-Verfahren (IHU = Innen-Hochdruck-Umformung) umgeformt wird.

13. Platten- oder Streifenwärmetauscher hergestellt nach einem Verfahren gemäß einem oder mehrerem der Ansprüche 1 bis 12, **dadurch gekennzeichnet, dass** der Platten- oder Streifenwärmetauscher zumindest ein plattenförmiges Werkstück (1) und eine Mehrzahl weitestgehend gleichgerichtete nebeneinander angeordnete rohrförmige Werkstücke (2) und/oder ein oder mehrere mäanderförmig ausgebildete rohrförmige Werkstücke (2) aufweist.

14. Platten- oder Streifenwärmetauscher nach Anspruch 13, **dadurch gekennzeichnet, dass** das zumindest eine plattenförmige Werkstück (1) und das/die rohrförmige/n Werkstück/e (2) aus unterschiedlichem oder gleichem metallenen Werkstoff bestehen.

15. Verwendung des Platten- oder Streifenwärmetauschers nach Anspruch 13 oder 14 als Strahlungsabsorber, insbesondere Sonnenkollektor, oder zur Raumheizung und/oder -kühlung oder zur Materialerwärmung und/oder - kühlung.

## Claims

1. Method for the continuous joining of at least one first elongated, thin-walled workpiece (1) to at least one second elongated, thin-walled workpiece (2), said workpieces (1, 2) being made of metallic materials, wherein the workpieces (1, 2), placed one on top of the other, are inserted into a rolling gap (3) between two roller wheels (4, 5), arranged opposite one another in an axially parallel manner and rotatable in opposite directions, while pressure can be applied to at least one of the roller wheels (4, 5) perpendicularly to the rolling direction and to the workpieces (1, 2), and are joined along a line (7) under a defined pressure "P" at joining intervals, **characterized in that** the workpieces (1, 2) are joined at joining intervals by cold pressure welding.

2. Method according to Claim 1, **characterized in that** a joining seam (10) having alternately joined and unjoined regions (11, 12) is formed.

3. Method according to Claim 2, **characterized in that** one roller wheel (4) is used as a punch wheel, having prominences (8) preferably evenly distributed over the circumference of the same like a sprocket wheel, and a roller wheel (5) arranged opposite in an axially parallel manner is used as a die wheel, having a circumferential groove (9) corresponding with the prominences (8) of the punch wheel or having recesses corresponding with the prominences (8) of the punch wheel.

4. Method according to Claim 1, **characterized in that** a joining seam (10) having regions (11) alternately joined in opposite directions is formed.

5. Method according to Claim 4, **characterized in that** two roller wheels (4, 5) are used which function both as a punch wheel and as a die wheel by virtue of the fact that each roller wheel (4, 5) has prominences (8) preferably evenly distributed over the circumference of the same like a sprocket wheel and circumferential groove sections or recesses arranged in between and corresponding to the prominences (8) of the other roller wheel (4, 5).

6. Method according to one of Claims 1 to 5, **characterized in that** regions (11) joined at said joining intervals are formed with a cup-shaped contour, the width extent of which is equal to, less than or greater than the length extent of the same.

7. Method according to Claim 6, **characterized in that** cup-shaped contours are formed with bead-like elevations (13) which arise in the edge regions thereof during the joining process and which in turn build up over the adjacent surface contour of the workpiece composite formed.

8. Method according to one of Claims 1 to 7 for the joining of a first, plate-like workpiece (1) to a second tubular workpiece (2),
- wherein a tubular workpiece (2) is used which is pressed together, at least in the region of the joining seam (10) to be formed, in such a way that two tube wall sections (2a, 2b) bearing flat against one another are formed,
- and wherein the first, plate-like workpiece (1) is joined to the second, tubular workpiece (2) by cold pressure welding under a defined pressure "P" in such a way that a joint is produced by said cold pressure welding merely between the first, plate-like workpiece (1) and the directly adjacent tube wall section (2a) of the second, tubular workpiece (2).

9. Method according to Claim 8, **characterized in that**, following the joining process by cold pressure welding, the second, tubular workpiece (2) is formed in defined manner in such a way that the tube wall sections (2a, 2b) placed one on top of another are spaced apart while forming an elongated cavity.

10. Method according to Claim 9, **characterized in that** the second, tubular workpiece (2) is formed in defined manner in such a way that, with the elongated cavity being retained, contact with the first, plate-like workpiece (1) is effected over as large an area as possible.

11. Method according to Claim 10, **characterized in that** the second, tubular workpiece (2) is formed into a workpiece having a largely oval or polygonal cross section.

12. Method according to one of Claims 8 to 11, **characterized in that** the second, tubular workpiece (2) is formed according to an IHPF process (IHPF = internal high pressure forming).

13. Plate or strip heat exchanger produced according to a method according to one or more of Claims 1 to 12, **characterized in that** the plate or strip heat exchanger has at least one plate-like workpiece (1) and a plurality of tubular workpieces (2) arranged next to one another largely in the same direction and/or one or more tubular workpieces (2) formed in a meander shape.

14. Plate or strip heat exchanger according to Claim 13, **characterized in that** the at least one plate-like workpiece (1) and the tubular workpiece(s) (2) are made of different metal materials or of the same metal material.

15. Use of the plate or strip heat exchanger according to Claim 13 or 14 as a radiation absorber, in particular a solar collector, or for space heating and/or cooling or for heating and/or cooling materials.

## Revendications

1. Procédé pour l'assemblage continu d'au moins une première pièce (1) avec au moins une deuxième pièce à paroi mince allongée (2) en matériaux métalliques, les pièces (1, 2) posées l'une au-dessus de l'autre, étant introduites dans une fente de laminage (3) entre deux roues de laminage (4, 5) pouvant tourner en sens inverse, disposées avec leurs axes parallèles en face l'une de l'autre, tandis qu'au moins l'une des roues de laminage (4, 5) peut être sollicitée en pression perpendiculairement au sens de laminage et aux pièces (1, 2), et étant assemblées le long d'une ligne (7) à intervalles d'assemblage sous une pression définie "P", **caractérisé en ce que** les pièces (1, 2) sont assemblées à intervalles d'assemblage par un soudage par pression à froid.

2. Procédé selon la revendication 1, **caractérisé en ce qu'**un joint d'assemblage (10) est réalisé avec une alternance de régions (11, 12) assemblées et non assemblées.

3. Procédé selon la revendication 2, **caractérisé en ce qu'**une roue de laminage (4) est utilisée en tant que roue poinçon avec des rehaussements (8) répartis de préférence uniformément sur sa circonférence, à la manière d'une roue à ergots, et une roue de laminage (5), disposée avec son axe parallèle en face de celle-ci, est utilisée en tant que roue matrice avec une rainure circonférentielle (9) correspondant aux rehaussements (8) de la roue poinçon ou avec des renfoncements correspondant aux rehaussements (8) de la roue poinçon.

4. Procédé selon la revendication 1, **caractérisé en ce qu'**un joint d'assemblage (10) est réalisé avec une alternance de régions (11) assemblées orientées en sens inverse.

5. Procédé selon la revendication 4, **caractérisé en ce que** deux roues de laminage (4, 5) sont utilisées, lesquelles servent à la fois de roue poinçon et de roue matrice, chaque roue de laminage (4, 5) disposant de rehaussements (8) répartis de préférence uniformément sur sa circonférence, à la manière d'une roue à ergots, et de portions de rainure circonférentielle ou de renfoncements disposé(e)s entre ces rehaussements et correspondant aux rehaussements (8) de l'autre roue de laminage (5, 4).

6. Procédé selon l'une quelconque des revendications 1 à 5, **caractérisé en ce que** des régions (11) assemblées dans lesdits intervalles d'assemblage sont réalisées avec un contour de type bouton dont l'étendue en largeur est égale, inférieure, ou supérieure à leur étendue en longueur.

7. Procédé selon la revendication 6, **caractérisé en ce que** des contours de type bouton sont réalisés avec des sur-rehaussements (13) en forme de bourrelet se formant pendant le processus d'assemblage dans leurs régions de bord, qui s'accumulent pour leur part au-delà du contour de surface adjacent de l'assemblage des pièces ainsi formé.

8. Procédé selon l'une quelconque des revendications 1 à 7, pour l'assemblage d'une première pièce en forme de plaque (1) à une deuxième pièce de forme tubulaire (2),
- une pièce de forme tubulaire (2) étant utilisée, laquelle, au moins dans la région du joint d'assemblage à réaliser (10), est comprimée de telle sorte que deux portions de paroi de tube (2a, 2b) superposées en plan soient réalisées,
- et la première pièce en forme de plaque (1) étant assemblée à la deuxième pièce de forme tubulaire (2) par soudage par pression à froid sous une pression définie "P" de telle sorte que seulement entre la première pièce en forme de plaque (1) et la portion de paroi de tube (2a) immédiatement adjacente de la deuxième pièce en forme de tube (2), une connexion par assemblage soit réalisée au moyen dudit soudage par pression à froid.

9. Procédé selon la revendication 8, **caractérisé en ce que**, suite au processus d'assemblage par soudage par pression à froid, la deuxième pièce de forme tubulaire (2) est déformée de manière définie de telle sorte que les portions de paroi de tube superposées (2a, 2b) soient espacées l'une de l'autre en formant une cavité allongée.

10. Procédé selon la revendication 9, **caractérisé en ce que** la deuxième pièce de forme tubulaire (2) est déformée de manière définie de telle sorte que l'on réalise un contact sur une aussi grande surface que possible avec la première pièce en forme de plaque (1) tout en conservant la cavité allongée.

11. Procédé selon la revendication 10, **caractérisé en ce que** la deuxième pièce de forme tubulaire (2) est déformée en une pièce avec une section transversale substantiellement ovale ou polygonale.

12. Procédé selon l'une quelconque des revendications 8 à 11, **caractérisé en ce que** la deuxième pièce de forme tubulaire (2) est déformée selon un procédé IHU de formage interne sous haute pression (IHU = Innen-Hochdruck-Umformung).

13. Echangeur de chaleur à plaques ou à bandes fabriqué suivant un procédé selon l'une quelconque ou plusieurs des revendications 1 à 12, **caractérisé en ce que** l'échangeur de chaleur à plaques ou à bandes présente au moins une pièce en forme de plaque (1) et une pluralité de pièces de forme tubulaire (2) disposées substantiellement dans le même sens les unes à côté des autres, et/ou une ou plusieurs pièces de forme tubulaire (2) réalisées en méandres.

14. Echangeur de chaleur à plaques ou à bandes selon la revendication 13, **caractérisé en ce que** l'au moins une pièce en forme de plaque (1) et la ou les pièce(s) de forme tubulaire (2) se composent de matériau métallique différent ou identique.

15. Utilisation de l'échangeur de chaleur à plaques ou à bandes selon la revendication 13 ou 14 en tant que dispositif d'absorption des rayonnements, notamment collecteur solaire, ou pour le chauffage et/ou le refroidissement de salles, ou pour chauffer et/ou refroidir des matériaux.
